(19) Europäisches Patentamt
European Patent Office
Office européen des brevets

(11) **EP 3 596 412 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **18713796.3**

(22) Anmeldetag: **01.03.2018**

(51) Internationale Patentklassifikation (IPC):
*F25B 49/02* *(2006.01)*

(52) Gemeinsame Patentklassifikation (CPC):
**F25B 49/022;** F25B 2500/222; F25B 2500/24;
F25B 2500/26; F25B 2600/01; F25B 2600/0253;
F25B 2700/1931; F25B 2700/1933; F25B 2700/195;
F25B 2700/2106; F25B 2700/21151;
F25B 2700/21152; F25B 2700/21163

(86) Internationale Anmeldenummer:
**PCT/EP2018/055083**

(87) Internationale Veröffentlichungsnummer:
**WO 2018/166810 (20.09.2018 Gazette 2018/38)**

(54) **VERFAHREN ZUM BETREIBEN EINES KÄLTEMITTELKREISLAUFS FÜR EINE FAHRZEUGKLIMAANLAGE**

METHOD FOR OPERATING A COOLANT CIRCUIT FOR A VEHICLE AIR-CONDITIONING SYSTEM

PROCÉDÉ PERMETTANT DE FAIRE FONCTIONNER D'UN CIRCUIT DE RÉFRIGÉRANT POUR UN SYSTÈME DE CLIMATISATION DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2017 DE 102017204122**

(43) Veröffentlichungstag der Anmeldung:
**22.01.2020 Patentblatt 2020/04**

(73) Patentinhaber: **Audi AG**
**85045 Ingolstadt (DE)**

(72) Erfinder:
• SCHROEDER, Dirk
85077 Manching (DE)
• REBINGER, Christian
80807 München (DE)
• ROTTENKOLBER, Helmut
93349 Mindelstetten (DE)
• WACK, Jan
85049 Ingolstadt (DE)

(56) Entgegenhaltungen:
JP-A- H08 128 765       JP-A- 2000 105 033
JP-A- 2004 162 979

**Beschreibung**

Die Erfindung betrifft ein Verfahren zum Betreiben eines Kältemittelkreislaufs für eine Fahrzeugklimaanlage gemäß dem Oberbegriff des Patentanspruchs 1.

Eine Fahrzeugklimaanlage mit einem Kältemittelkreislauf zur Realisierung eines Kälteanlagenbetriebes und ggf. auch mit einer Wärmepumpenfunktion kann in Abhängigkeit des Fahrzeugantriebskonzeptes mit einem mechanischen oder elektrischen Kältemittelverdichter ausgerüstet werden.

Ein mechanischer Kältemittelverdichter wird über einen mit dem Fahrmotor des Fahrzeugs verbundenen Riementrieb angetrieben und mittels eines Regelstromes, ausgegeben über eine Steuereinheit an ein als Proportionalventil ausgebildetes Verdichterregelventil des Kältemittelverdichters, differenzdruck-, massenstrom- oder saugdruckgeregelt. Ein elektrischer Kältemittelverdichter weist einen internen Elektromotor als Antrieb auf, so dass eine Drehzahlregelung ermöglicht wird. Darüber hinaus können auch mechanische Verdichter über einen elektrisch angetriebenen und vom Motor entkoppelbaren Riementrieb eingesetzt werden.

Zum Anlaufen des Kälteanlagen- oder des Wärmepumpenbetriebs werden mechanische Kältemittelverdichter in der Regel mit einem Regelstromsignal als Ansteuersignal über das Verdichterregelventil angesteuert, wobei der Regelstrom einem entsprechenden Saugdruck korrespondiert oder einem Kältemittelmassenstrom entspricht. Bei elektrischen Verdichtern wird direkt ein Drehzahlsignal als Ansteuersignal erzeugt, um über dieses Drehzahlsignal einen entsprechenden Kältemittelmassenstrom einzustellen. Solche elektrische Verdichter werden in Hubkolben- (axialer oder radialer Auslegung), Flügelzellen- oder Spiralbauweise (Scroll) in Elektrofahrzeuge eingesetzt.

Als Regelgröße für die Regelung eines Kältemittelverdichters eines Kältemittelkreislaufs wird in der Regel die Lufttemperatur am Austritt des Kältemittelverdampfers oder ein niederdruck- bzw. hochdruckseitig erfasster Kältemitteldruck im Kältemittelkreislauf verwendet. Der letztgenannte Fall tritt insbesondere dann ein, wenn Sicherheitsdruckgrenzen im Kältemittelkreislauf hinsichtlich des Hochdrucks überschritten werden. Es kann auch die Situation der Unterschreitung von Betriebsdruckgrenzen (bspw. des Niederdrucks) auftreten, diese sind als weniger kritisch zu bewerten, sollten jedoch vermieden werden. Besteht bei einer solchen Regelung zwischen einem Soll- und einem Istwert der Regelgröße eine in der Anlaufphase des Kältemittelverdichters üblicherweise auftretende hohe Regelabweichung, wird das Ansteuersignal so lange angehoben, bis die Regelabweichung minimal wird. Bei einer positiven Abweichung, also wenn der Istwert größer als der Sollwert ist, wird das Ansteuersignal reduziert. Eine negative Abweichung, wenn also der Istwert kleiner als der Sollwert ist, führt zu einer Anhebung des Ansteuersignals. Reagiert ein Verdichter aufgrund eines Fehlverhaltens bzw. eines Defektes in der Anlaufphase kurzfristig nicht oder konträr zu dem ausgegebene Ansteuersignal, bspw. aus Gründen einer internen Leckage, bleibt die Regelabweichung hoch. Daher wird das Ansteuersignal kontinuierlich bis zu einem maximalen Wert erhöht. Führt dies spontan zur Förderung von Kältemittel, weil bspw. aufgrund einer spontanen Abdichtung zwischen den beiden Scrollelementen (stationär und orbitierend) oder wegen der Überwindung einer Haftreibung an einer Taumelscheibe der Verdichter zu fördern beginnt, sind Druckspitzen die Folge, die schlagartig auftreten und die zulässigen Systemgrenzen des Kältemittelkreislaufs überschreiten können. Idealerweise sollte die Regelung so ausgelegt sein, den maximal zulässigen Hochdruck einzuregeln oder den Druckimpuls durch eine Verdichterabschaltung und anschließendem Neuanlauf zu dämpfen. Es nicht ausgeschlossen, dass die zulässigen Grenzen aufgrund von hohen Druckgradienten überschritten und dadurch Ablassventil oder Berstscheiben ansprechen können. Schlimmstenfalls ist mit Bauteilschädigungen zu rechnen.

Aus der DE 199 35 731 A1 ist ein Verfahren zum Betreiben einer unter- oder transkritisch betriebenen Fahrzeugkälteanlage bekannt. Damit beim Anfahren der Fahrzeugkälteanlage der Kältemittelmassenstrom und der Hochdruck sofort auf einen gewünschten Wert ansteigen, wird vorgeschlagen, dass während der Anlaufphase der Kältemittelmassenstrom unmittelbar auf einen bedarfsgerechten Wert und der Kältemitteldruck nach mindestens einer vorgegebenen Kenngröße eingestellt wird, wobei Sicherheitsdruckgrenzen vorgegeben sind, bei deren Überschreitung die Fahrzeugkälteanlage geregelt wird. So wird bspw. vorgeschlagen, während der Anlaufphase des Kältemittelverdichters bei hohen Außentemperaturen und/oder bei hohen Kältemittelruhedrücken den Kältemittelmassenstrom durch den Kältemittelverdichter auf einen vorgegebenen Wert zu begrenzen. Alternativ wird vorgeschlagen, bei hohen Außentemperaturen und/oder hohen Kältemittelruhedrücken die Verdichterantriebsleistung auf einen vorgegebenen Wert zu begrenzen.

Nachteilig an diesem Verfahren ist jedoch, dass ein Fehlstart eines Kältemittelverdichters, bspw. aufgrund einer internen Leckage nicht erkannt werden kann. Das Verhalten eines Kältemittelverdichters wird als Fehlstart bezeichnet, wenn bei Ausgabe eines Steuersignals seitens eines Steuergerätes an den Verdichter, also an den Elektroantrieb oder an das Regelventil bei rotierendem Riemen kein Druckaufbau messbar ist, d.h. es findet weder eine Anhebung des Hochdruckes noch eine Absenkung des Niederdruckes statt, das Ruhedruckniveau bleibt weiter erhalten, was wiederum bedeutet, dass sich keine Förderung von Kältemittel innerhalb der Kälteanlage einstellt.

Des Weiteren ist aus der DE 37 06 152 A ein Verfahren zur Steuerung einer Fahrzeugklimaanlage mit einem Kältekreislauf bekannt, mit welcher die Kälteleistung optimiert und die jeweilige Funktion der die Betriebsweise der Klimaanlage beeinflussenden Aggregate in die Regelcharakteristik einbezogen wird. Hierzu wird vorgeschlagen, die Verdichterleistung eines Kältemittelverdichters, die Kondensatorleistung eines Kältemittelkondensators und die Verdampferleistung eines Verdampfers zu erfassen und als elektrische Größe einem Steuergerät zuzuführen. Diese Eingangsgrößen werden verknüpft und in Abhängigkeit von mindestens zwei dieser Eingangsgrößen unter Einbeziehung der Parameter für den Kälteleistungsbedarf Ausgangssignale erzeugt, die an steuerbaren Stellmitteln zur Beeinflussung der Verdichterleistung, der Kondensatorleistung und/oder der Verdampferleistung zugeführt werden. Zur weiteren Optimierung des Leistungsbedarfs kann die Verdichterleistung beeinflusst werden, indem das geometrische Fördervolumen durch eine direkte Hubveränderung oder durch Steuerung des Schließzeitpunkts des Verdichtungsraumes verändert oder der Füllungsgrad durch eine veränderliche Ausgangsdrosselung gesteuert oder die Drehzahl des Verdichters gesteuert wird.

Auch bei diesem bekannten Verfahren ist es nachteilig, dass ein Fehlstart eines Kältemittelverdichters nicht erkannt werden kann.

Aus der JP 2000 105033 A ist ein Kältemittelkreislauf für eine Fahrzeugklimaanlage mit einem Kältemittelverdichter, welcher mittels eines Ansteuersignals zur Regelung der Verdichterleistung regelbar ist, einem Kondensator oder Gaskühler, einem Verdampfer mit zugeordnetem Expansionsorgan und Temperatursensormittel zur Messung der Verflüssigungstemperatur und der Außentemperatur bekannt. Zur Erzeugung einer Anlaufphase des Kältemittelverdichters wird dessen Ansteuersignal ausgehend von einem Minimalwert zeitlich ansteigend bereitgestellt. Mit diesem Verfahren soll ein Mangel an Kältemittel detektiert und gegebenenfalls der Kältemittelverdichter abgestellt werden.

Um einen Kältemittelverdichter eines Kältemittelkreislaufes bei Auftreten eines Kältemittelmangels zu schützen, wird gemäß der JP H08 128765 A vorgeschlagen, die Drehzahl des Kältemittelverdichters, dessen Betriebsstrom und die Leistung eines internen oder externen Wärmetauschers zu überwachen.

Aus der JP 2004 162878 ist ein Verfahren zur Detektion einer Leckage eines Kältemittelkreislaufes mit einem Kältemittelverdichter, einem inneren und äußeren Wärmetauscher bekannt. Hierzu werden der Betriebsstrom des Kältemittelverdichters, die Temperaturdifferenz zwischen dem inneren Wärmetauscher und der Fahrzeuginnentemperatur sowie die Temperaturdifferenz zwischen dem äußeren Wärmetauscher und der Umgebungstemperatur mit Grenzwerten verglichen und bei bestimmten Konstellationen auf eine Leckage geschlossen.

Es ist Aufgabe der Erfindung ein Verfahren der eingangs genannten Art anzugeben, mit welchem Druckspitzen im Kältemittelkreislauf und damit ein unkontrollierter Druckaufbau im System der Fahrzeugklimaanlage in einer Anlaufphase des Kältemittelverdichters weitestgehend und zuverlässig verhindert wird. Es soll bereits frühzeitig diagnostiziert werden können, dass ein Fehlverhalten vorliegt.

Diese Aufgabe wird gelöst durch ein Verfahren mit den Merkmalen des Patentanspruchs 1.

Nach dieser Lösung zeichnet sich ein solches Verfahren zum Betreiben eines Kältemittelkreislaufs für eine Fahrzeugklimaanlage mit

- einem Kältemittelverdichter, welcher mittels eines Ansteuersignals ST zur Regelung der Verdichterleistung regelbar ist,
- einem Kondensator oder Gaskühler,
- einem Verdampfer mit zugeordnetem Expansionsorgan, und
- wenigstens einem Drucksensormittel zur Messung des Kältemitteldruckes auf der Hochdruck- und/oder Niederdruckseite des Kältemittelkreislaufs, erfindungsgemäß dadurch aus, dass

a) zur Erzeugung einer Anlaufphase des Kältemittelverdichters dessen Ansteuersignal ST ausgehend von einem Minimalwert $ST_{min}$ zeitlich ansteigend bereitgestellt wird,
b) ein Steuersignalmaximalwert $ST_{max}$ und ein Steuersignalschwellwert STsw mit STsw< STmax bereitgestellt werden,
c) das Ansteuersignal ST auf den Steuersignalmaximalwert $ST_{max}$ begrenzt wird, wenn das Ansteuersignal ST den Steuersignalschwellwert STsw erreicht und der gemessene Hoch- und/oder Niederdruckdruckwert eine der folgenden Bedingungen erfüllt bzw. erfüllen:

(I) der Hochdruckwert kleiner als ein Hochdruckschwellwert $S_{P\_HD}$ ist,
(II) der Niederdruckwert größer als ein Niederdruckschwellwert $S_{P\_ND}$ ist, und/oder
(III) die Differenz von Hochdruckwert und Niederdruckwert kleiner als ein Differenzdruckschwellwert $S_{\Delta P}$ ist, und

d) nach Ablauf einer definierten Zeitdauer die Anlaufphase des Kältemittelverdichters beendet wird, wenn der gemessene Hochdruckwert und/oder der gemessene Niederdruckwert nach wie vor eine der Bedingungen I bis III erfüllen bzw. erfüllt.

Gemäß diesem erfindungsgemäßen Verfahren wird das Anlaufverhalten des Kältemittelverdichters entweder ausschließlich auf der Basis des Hochdrucks im Kältemittelkreislauf, ausschließlich auf der Basis des Niederdrucks im Kältemittelkreislauf oder auf der Basis des Hochdrucks und des Niederdrucks im Kältemittelkreislauf überwacht. Steigt bei der Ansteuerung des Kältemittelverdichters das Ansteuersignal ST bis zu dem Steuersignalschwellwert STsw und ist gleichzeitig während dieser Anlaufphase wenigstens eine der Bedingungen I bis III erfüllt, wird das Ansteuersignal ST auf den Steuersignalmaximalwert $ST_{max}$ begrenzt und der Kältemittelverdichter unter diesen Randbedingungen weiter betrieben. Ändern sich nach Ablauf einer definierten Zeitdauer diese Randbedingungen nicht, d. h. ist nach wie vor wenigstens eine der Bedingungen I bis III erfüllt, wird die Anlaufphase des Kältemittelverdichters beendet. Der Kältemittelverdichter kann dauerhaft abgeschaltet werden oder ein Neuanlauf, als eine weitere Anlaufphase initiiert werden. Führt ein solcher Neueinlauf zum gleichen Ergebnis, bleibt der Kältemittelverdichter abgeschaltet. Die Anzahl der Versuche zu Neuanläufen des Verdichters pro Fahrzyklus kann auf eine bestimmt Anzahl (bspw. 5) festgelegt werden. Sollte sich kein regulärer Betrieb einstellen, so kann eine an den Fahrer gerichtete Fehlermeldung erzeugt werden und gleichzeitig ein Derating-Prozess verschiedener Fahrzeugsysteme, welche sich insbesondere nachteilig auf die Entwicklung der Batterietemperatur auswirken können, initiiert werden, um weiterhin eine Nutzung des Fahrzeuges im Rahmen der zulässigen Bauteiltemperaturgrenzen zu ermöglichen.

Wird das Anlaufverhalten des Kältemittelverdichters lediglich auf der Basis des Hochdrucks im Kältemittelkreislauf überwacht, ist lediglich die Bedingung I zu prüfen. Steigt dieser Hochdruck während des ansteigenden Ansteuersignals ST bis zu dem Steuersignalschwellwert STsw nicht an, bleibt also kleiner als der Hochdruckschwellwert $S_{P\_HD}$, wird das Ansteuersignal ST auf den Steuersignalmaximalwert $ST_{max}$ begrenzt. Die Bedingung (I) schließt natürlich auch die Bedingung ein, dass der Hochdruckwert $P_{HD}$ nahezu unverändert, also während der definierten Zeitdauer auf dem gleichen Wert bleibt.

Wird das Anlaufverhalten des Kältemittelverdichters lediglich auf der Basis des Niederdrucks im Kältemittelkreislauf überwacht, ist lediglich die Bedingung II zu prüfen. Fällt dieser Niederdruck während des ansteigenden Ansteuersignals ST bis zu dem Niederdruckschwellwert $S_{P\_ND}$ nicht ab, bleibt also größer als der Niederdruckschwellwert $S_{P\_ND}$, wird das Ansteuersignal ST auf den Steuersignalmaximalwert $ST_{max}$ begrenzt.

Die Bedingung (II) schließt natürlich auch die Bedingung ein, dass der Niederdruckwert $P_{ND}$ nahezu unverändert, also während der definierten Zeitdauer auf dem gleichen Wert bleibt.

Wird das Anlaufverhalten des Kältemittelverdichters sowohl auf der Basis des Hochdrucks als auch auf der Basis des Niederdrucks im Kältemittelkreislauf überwacht, ist zumindest die Bedingung III zu prüfen. Steigt die Differenz zwischen dem Hochdruck und dem Niederdruck während des ansteigenden Ansteuersignals ST bis zu dem Steuersignalschwellwert STsw nicht an, bleibt also kleiner als der Differenzdruckschwellwert $S_{\Delta P}$, wird das Ansteuersignal ST auf den Steuersignalmaximalwert $ST_{max}$ begrenzt.

Die Bedingung (III) schließt natürlich auch die Bedingung ein, dass die Differenz von Hochdruckwert $P_{HD}$ und Niederdruckwert $P_{ND}$ auf dem Wert bzw. nahe Null bleibt.

Bei der Überwachung sowohl des Hochdrucks als auch des Niederdrucks kann zusätzlich auch die Bedingung I oder II oder die beiden Bedingungen I und II zur Überwachung des Einlaufverhaltens des Kältemittelverdichters verwendet werden.

Zusammenfassend besteht das erfindungsgemäße Verfahren darin, dass für den Systemstart des Kältemittelkreislaufs der Fahrzeugklimaanlage ein Steuersignal ST erzeugt wird, welches ausgehend von dem Minimalwert $ST_{min}$ als Startwert kontinuierlich unter wenigstens eine der Bedingungen I, II und/oder III bis zu einem Steuersignalmaximalwert $ST_{max}$ erhöht wird, wenn das Ansteuersignal ST den Steuersignalschwellwert STsw erreicht und wenigstens eine der Bedingungen I, II und/oder III auch nach Ablauf der definierten Zeitdauer erfüllt bleiben.

Zumeist wird für den Systemstart eine Drehzahlüberhöhung von bspw. 1500rpm als Startimpuls erforderlich, um einen Anlauf des Kältemittelverdichters sicherzustellen. Im Anschluss an einen erfolgreichen Verdichteranlauf wird dann die eigentliche Betriebsdrehzahl eingestellt, die bspw. dem Minimalwert $ST_{min}$ von 800rpm als minimaler Drehzahlwert entsprechen kann. Mit diesem erfindungsgemäßen Verfahren wird eine allgemeine Diagnose des Kältemittelverdichters, insbesondere jedoch dessen Anlauf- und Betriebsverhalten realisiert und gleichzeitig Druckspitzen innerhalb des Kältemittelkreislaufs, die auf eine Komponentenfehlfunktion zurückzuführen sind, verhindert. Damit werden ein effektiver Bauteilschutz und eine effektive Bauteilsicherung sichergestellt und unnötige Neubefüllungen und Bauteilwechsel sowie Bauteilwartungsarbeiten vermieden.

Nach einer vorteilhaften Ausgestaltung der Erfindung ist es vorgesehen, dass:

e) der Kältemittelverdichter mit Diagnosemittel ausgebildet wird, mit welchen wenigstens eine Leistungsgröße des Kältemittelverdichters erzeugt wird, und anstelle der Verfahrensschritte c und d folgende Verfahrensschritte durchgeführt wird:

c1) das Ansteuersignal ST auf den Steuersignalmaximalwert $ST_{max}$ begrenzt wird, wenn das Ansteuersignal ST den Steuersignalschwellwert STsw erreicht, die Leistungsgröße kleiner als ein definierter Leistungsschwellwert $S_L$ ist und der gemessene Hoch- und/oder Niederdruckdruckwert eine der folgenden Bedingungen erfüllt bzw. erfüllen:

I) der Hochdruckwert kleiner als ein Hochdruckschwellwert $S_{P\_HD}$ ist,

II) der Niederdruckwert größer als ein Niederdruckschwellwert $S_{P\_ND}$ ist, oder

III) die Differenz von Hochdruckwert und Niederdruckwert kleiner als ein Differenzdruckschwellwert $S_{\Delta P}$ ist, und

d1) nach Ablauf einer definierten Zeitdauer die Anlaufphase des Kältemittelverdichters beendet wird, wenn der gemessene Hochdruckwert und/oder der gemessene Niederdruckwert nach wie vor eine der Bedingungen I bis III erfüllen bzw. erfüllt und die Leistungsgröße kleiner als der Leistungsschwellwert $S_L$ ist.

Bei dieser Weiterbildung des erfindungsgemäßen Verfahrens weist der Kältemittelkreislauf einen eigendiagnosefähigen Kältemittelverdichter auf, welcher als elektrischer Kältemittelverdichter ein bspw. das Drehmoment oder ein die aufgenommene Leistung oder ein die resultierende Antriebsleistung als eine Leistungsgröße ausgebendes und anzeigendes Diagnosesignal erzeugt. Diese Leistungsgröße wird zusätzlich für die Bewertung des Anlaufverhaltens des Kältemittelverdichters verwendet. Wird neben der Bedingung I, II oder III keine Zunahme der Leistungsgröße über den Leistungsschwellwert $S_L$ anhand der Diagnosesignale des Kältemittelverdichters detektiert, wird entsprechend den Verfahrensschritten c1 und d1 Verfahren.

Werden die vorgegebenen Schwellwerte bei dem erfindungsgemäßen Verfahren oder bei dessen Weiterbildung überschritten, wird dies als betriebsgemäßer Anlauf des Kältemittelverdichters interpretiert. Dies bedeutet dass sich die Drücke im Kältemittelkreislauf sowie die Diagnosesignale eines eigendiagnosefähigen Kältemittelverdichters während des Anlaufs erwartungsgemäß verhalten. In diesem Fall wird die Anlaufphase des Kältemittelverdichters verlassen und die Regelparameter freigegeben, so dass der Kältemittelverdichter mit der betriebsgemäßen Regelung betrieben werden kann.

Nach einer weiteren vorteilhaften Weiterbildung der Erfindung wird der Steuersignalmaximalwert $ST_{max}$ in Abhängigkeit der Höhe einer Regelabweichung zwischen einem Sollwert einer den Kältemittelkreislauf regelnden Regelgröße und deren Istwert bestimmt wird. Eine große Regelabweichung bedeutet in diesem Fall, dass eine hohe Last an dem Kältemittelkreislauf anliegt.

In vorteilhafter Weise wird der Kältemittelverdichter als elektrischer Kältemittelverdichter mit einem Elektromotor ausgebildet, wobei als Ansteuersignal ein Drehzahlsignal für den Elektromotor verwendet wird. Ferner kann der Kältemittelverdichter auch als mechanischer Kältemittelverdichter mit einem Proportionalventil ausgebildet werden, wobei als Ansteuersignal ein Regelstromsignal für das Proportionalventil verwendet wird.

Das erfindungsgemäße Verfahren kann auch bei einem Kältemittelkreislauf mit einer Wärmepumpenfunktion eingesetzt werden.

Das erfindungsgemäße Verfahren eignet sich für den Einsatz in einer Fahrzeugklimaanlage mit einem Kältemittelkreislauf, welcher neben einem Kühlbetrieb (Kälteanlagenfunktion) auch in einem Heizbetrieb (Wärmepumpenfunktion) betrieben werden kann.

Die Erfindung wird nachfolgend anhand von Ausführungsbeispielen unter Bezugnahme auf die beigefügten Figuren ausführlich beschrieben.

Es zeigen:

Figur 1    ein Schaltbild einer Fahrzeug-Kälteanlage zur Durchführung des erfindungsgemäßen Verfahrens,

Figur 2    ein Ablaufdiagramm zur Erläuterung des erfindungsgemäßen Verfahrens,

Figur 3    ein Ausschnitt des Ablaufdiagramms nach Figur 2 zur Erläuterung einer alternativen Ausführung des erfindungsgemäßen Verfahrens,

Figur 4    ein weiterer Ausschnitt des Ablaufdiagramms nach Figur 2 zur Erläuterung einer weiteren alternativen Ausführung des erfindungsgemäßen Verfahrens,

Figur 5    ein weiterer Ausschnitt des Ablaufdiagramms nach Figur 2 zu Erläuterung einer weiteren alternativen Ausführung des erfindungsgemäßen Verfahrens,

Figur 6    ein Temperatur-Drehzahl-Diagramm mit Kennlinien zur Bestimmung eines Steuersignalmaximalwertes $ST_{max}$, und

Figur 7    ein weiteres Temperatur-Drehzahl-Diagramm mit Kennlinien zur Bestimmung eines Steuersignalmaximalwertes $ST_{max}$.

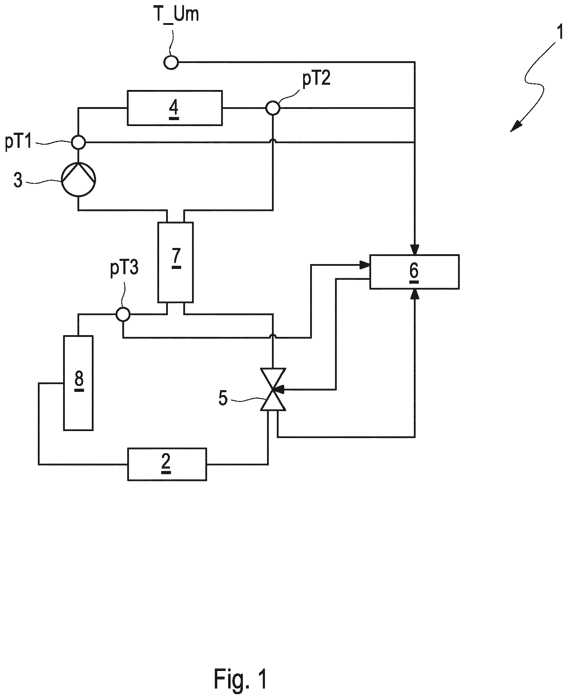

Die Figur 1 zeigt einen Kältemittelkreislauf 1 einer Fahrzeugklimaanlage, der aus einem Verdampfer 2, einem Kältemittelverdichter 3, einem Kältemittelkondensator bzw. Gaskühler 4, einem dem Verdampfer 2 in Strömungsrichtung eines Kältemittels, bspw. eines R744-Kältemittels vorgeschalteten Expansionsorgan 5, einem inneren Wärmeübertrager 7 sowie einem Kältemittelsammler 8 aufgebaut ist.

Die Regelung des Kältemittelkreislaufs 1 erfolgt mittels eines Steuergerätes 6 in Abhängigkeit von Parametern, die dem Steuergerät 6 als Eingangsgrößen zugeführt werden. Als Eingangsgrößen werden u.a. Druck- und Temperaturwerte von Druck-Temperatur-Sensoren pT1, pT2 und pT3 erfasst, wobei alternativ auch reine Drucksensoren zum Einsatz kommen können. Der Druck-Temperatur-Sensor pT1 ist auf der Hochdruckseite in Strömungsrichtung des Kältemittels nach dem Verdichter 3, der Druck-Temperatur-Sensor pT2 in Strömungsrichtung des Kältemittels nach dem Kondensator bzw. Gaskühler 4 und der Druck-Temperatur-Sensor pT3 in Strömungsrichtung des Kältemittels nach dem Kältemittelsammler 8 in dem Kältemittelkreislauf 1 angeordnet. Der Druck-Temperatur-Sensor pT1 erfasst den Hochdruck sowie die Heißgastemperatur direkt am Austritt des Verdichters, der Druck-Temperatur-Sensor pT2 den Hochdruck sowie die Kältemitteltemperatur am Austritt des Kondensators bzw. Gaskühlers 4 zur Umsetzung einer Regelung des optimalen Hochdrucks bzw. der Unterkühlung des Kältemittels am Austritt des des Kondensators bzw. Gaskühlers 4 und der Druck-Temperatur-Sensor pT3 den Niederdruck des Kältemittelkreislaufs 1. Die Umgebungstemperatur wird mittels eines Temperatursensors T_Um erfasst und ebenso dem Steuergerät 6 zugeführt.

Bei der Verwendung eines Kältemittelsammlers als Niederdruckspeicher erweist es sich als vorteilhaft, den Drucksensor pT3 direkt nach dem Kältemittelsammler 8 in den Leitungsverlauf einzubinden, da hier direkt eine Unterfüllungserkennung mit realisiert werden kann. In der Regel ist es jedoch üblich und Stand der Technik, dass die Sensoren pT1 und pT2 direkt im Ein- oder Austrittsbereich des Kältemittelverdichters 3 bzw. im Ein- oder Austrittsbereich des Kondensators bzw. des Gaskühlers 4 verbaut werden.

Im Kälteanlagenbetrieb des Kältemittelkreislaufes 1 wird das von dem Kältemittelverdichter 3 verdichtete Kältemittel dem im Frontbereich des Fahrzeugs angeordneten Kältemittelkondensator 4 bzw. Gaskühler 4 zugeführt, an dem das Kältemittel kondensiert bzw. abkühlt, bevor es nach einer Durchleitung durch den inneren Wärmeübertrager 7 mittels des Expansionsorgans 5 in den Verdampfer 2 entspannt wird. Ein dem Verdampfer 2 zugeführter Frisch-, Umluft- oder Teilumluftstrom wird von demselben gekühlt und als Zuluftstrom in die Fahrgastzelle des Fahrzeugs zugeführt. Das in dem Verdampfer 2 verdampfte Kältemittel wird über den Kältemittelsammler 8 und den inneren Wärmeübertragung 7 niederdruckseitig wieder dem Verdichter 3 zugeführt.

Der Kältemittelverdichter 3 des Kältemittelkreislaufs 1 ist entweder als mechanischer Kältemittelverdichter oder als elektrischer Kältemittelverdichter ausgebildet. Ein mechanischer Kältemittelverdichter wird über einen mit dem Fahrmotor des Fahrzeugs verbundenen Riementrieb angetrieben und mittels eines Regelstromes über ein Verdichterregelventil des Kältemittelverdichters differenzdruck-, massenstrom- oder saugdruckgeregelt. Ein elektrischer Kältemittelverdichter weist einen internen Elektromotor als Antrieb auf, so dass eine Drehzahlregelung ermöglicht wird. Darüber hinaus können auch mechanische Verdichter über einen elektrisch angetriebenen und vom Motor entkoppelbaren Riementrieb verwendet werden.

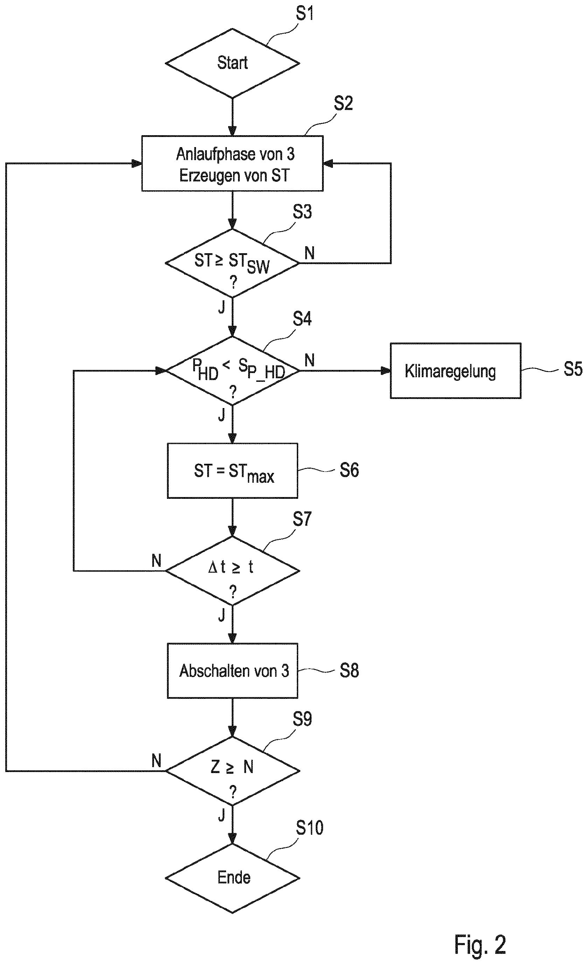

Erhält das Steuergerät 6 eine Anforderung zum Anlauf des Kältemittelverdichters 3 wird das anhand der Figuren 2 bis 7 erläuterte erfindungsgemäße Verfahren zur Überwachung des Anlaufverhaltens des als elektrischer oder mechanischer ausgebildeten Kältemittelverdichters 3 mit dem Verfahrensschritt S1 gemäß Figur 2 durchgeführt.

Mit dem Start des Verfahrens beginnt die Anlaufphase des Kältemittelverdichters 3, indem ein Ansteuersignal ST ausgehend von einem Minimalwert $ST_{min}$ als Startwert zeitlich ansteigend von dem Steuergerät 6 erzeugt wird (vgl. Verfahrensschritt S2). Das ansteigende Ansteuersignal ST wird gemäß einem Verfahrensschritt S3 ständig mit einem Steuersignalschwellwert STsw verglichen, indem die Bedingung:

$$ST \geq ST_{SW}$$

geprüft wird. Solange dieser Steuersignalschwellwert STsw von dem Ansteuersignal ST nicht erreicht wird, wird das Ansteuersignal ST kontinuierlich erhöht. Andernfalls, wenn der Steuersignalschwellwert STsw von dem Ansteuersignal ST erreicht wird, erfolgt eine Überwachung des mit dem Druck-Temperatur-Sensors pT1 sensierten Hochdrucks $P_{HD}$ des Kältemittelkreislaufs 1 mit folgender Bedingung (I):

$$P_{HD} < S_{P\_HD}, \tag{I}$$

wobei $S_{P\_HD}$ ein vorgegebener definierter Hochdruckschwellwert ist.

Wird diese Bedingung (I) während des Anstiegs des Ansteuersignals ST bis zum Erreichen des Steuersignalschwellwertes STsw nicht erreicht, steigt also der Hochdruck $P_{HD}$ nicht an, wird das Ansteuersignal ST auf einen maximal zulässigen Wert, nämlich den Steuersignalmaximalwert $ST_{max}$ begrenzt und mit einem solchen Ansteuersignal ST = $ST_{max}$ der Kältemittelverdichter 3 weiter betrieben. Ändert sich diese Bedingung (I) während einer sich daran anschließenden definierten Zeitdauer t nicht, steigt also der Hochdruck $P_{HD}$ nicht über den Hochdruckschwellwert $S_{P\_HD}$ an (vgl. Verfahrensschritt S7), wird in einem sich daran anschließenden Verfahrensschritt S8 der Kältemittelverdichter 3 abgeschaltet, d. h. dieser Zustand des Kältemittelverdichters 3, wenn also auch nach Ablauf dieser definierten Zeitdauer t der Hochdruck $P_{HD}$ nicht ansteigt, wird als Fehlstart oder Fehlanlauf des Kältemittelverdichters 3 interpretiert.

Wird jedoch die Bedingung (I) mit dem Erreichen des Steuersignalschwellwertes STsw nicht erfüllt bzw. während der Zeitdauer t nicht erfüllt, wird auf einen Verfahrensschrittes S5 verzweigt, mit welchem das Ansteuersignal ST freigegeben und eine betriebsgemäße Klimaregelung mittels des Steuergerätes 6 durchgeführt wird.

Gemäß Verfahrensschrittes S8 kann der Kältemittelverdichter 3 abgeschaltet bleiben und eine Fehlermeldung erzeugt oder ein Fehler-Flag in einem Fehlerspeicher des Steuergerätes 6 hinterlegt werden.

Gemäß Figur 2 ist es auch möglich, einen Neustart durchzuführen, indem mittels eines Zählers Z die Anzahl N der Neustarts gezählt werden (vgl. Verfahrensschritt S9) und auf den Verfahrensschritt S2 zurückverzweigt wird. Wiederholt sich hier das Verhalten des Kältemittelverdichters während seiner Anlaufphase, dass ein Fehlstart identifiziert wird, wird nach dem Erreichen einer vorgegebenen Anzahl N das Verfahren mit einem Verfahrensschritt S 10 beendet, d. h. der Kältemittelverdichter 3 wird endgültig abgeschaltet.

Anstelle der Bedingung (I) kann die folgende Bedingung (II) verwendet werden:

$$P_{ND} > S_{P\_ND}, \qquad\qquad\qquad (II)$$

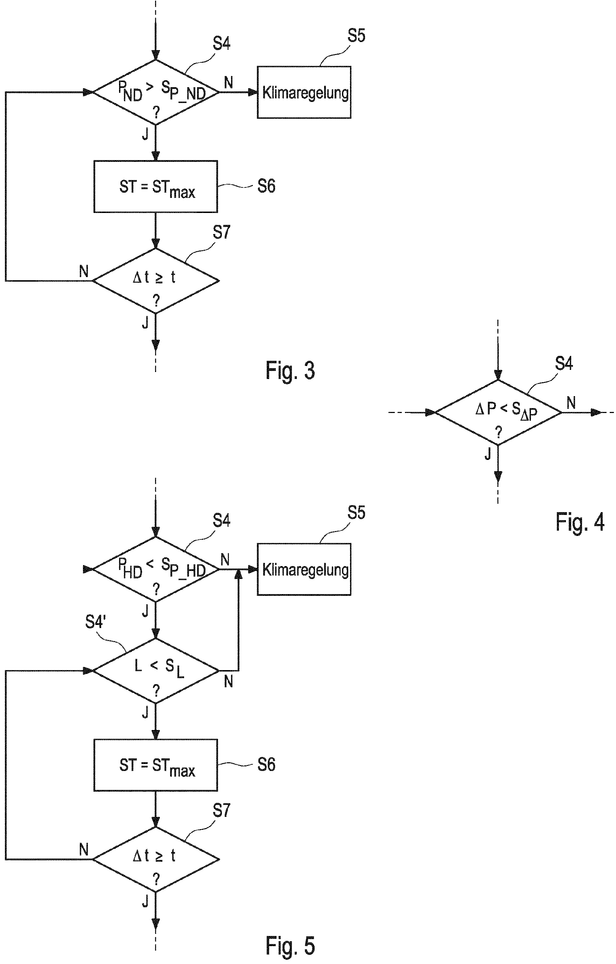

wobei $S_{P\_ND}$ ein Niederdruckschwellwert ist, welcher mit dem mittels des Druck-Temperatur-Sensors pT3 erfassten Niederdrucks $P_{ND}$ verglichen wird. Das Anlaufverhalten des Kältemittelverdichters 3 wird auf der Basis des Verhaltens des Niederdrucks $P_{ND}$ im Kältemittelkreislauf 1 überwacht. Das zugehörige Verfahren entspricht demjenigen gemäß Figur 2, wobei der Verfahrensschritt S4 nach Figur 2 durch den Verfahrensschritt S4 nach Figur 3 ersetzt ist.

Weiterhin ist es auch möglich, nicht nur den Hochdruck $P_{HD}$ oder den Niederdruck $P_{ND}$ im Kältemittelkreislauf 1 während einer Anlaufphase des Kältemittelverdichters 3, sondern die Differenz $\Delta P$ ($= P_{HD} - P_{ND}$) dieser beiden Drücke $P_{HD}$ und $P_{ND}$ zu überwachen. Hierzu wird ein Differenzdruckschwellwert $S_{\Delta P}$ erzeugt und gemäß folgender Bedingung (III) mit dem Differenzdruck $\Delta P$ verglichen:

$$\Delta P < S_{\Delta P}. \qquad\qquad\qquad (III)$$

Diese Bedingung (III) wird anstelle der Bedingung (I) oder (II) zur Durchführung des Verfahrens nach Figur 2 durchgeführt, wobei der Verfahrensschritt S4 durch den Verfahrensschritten S4 gemäß Figur 4 ersetzt wird.

Schließlich ist es auch möglich, in den Verfahrensschritten gemäß Figur 2 nicht nur die Bedingung (I), sondern gleichzeitig auch die Bedingungen (II) und (III) zu prüfen, und sobald mindestens eine dieser Bedingungen (I) bis (III) erfüllt ist, das Verfahren mit dem Verfahrensschritt S6 weiterzuführen.

Wird ein elektrischer Kältemittelverdichter 3 eingesetzt, welcher eigendiagnosefähig ausgebildet ist, also Diagnosemittel aufweist, so erzeugen diese mindestens ein Diagnosesignal, welches bspw. das erzeugte Drehmoment und/oder die aufgenommene Leistung und oder die resultierende Arbeitsleistung als Leistungsgröße anzeigt. Eine solche Leistungsgröße L kann ebenso zur Überwachung des Anlaufverhaltens des Kältemittelverdichters 3 verwendet werden.

Hierzu wird der Verfahrensschritt S4 nach Figur 2 durch den Verfahrensschritt S4'gemäß Figur 5 erweitert. Bei einem solchen Verfahren wird ebenso zunächst mit dem Verfahrensschritt S4 die Bedingung (I) geprüft und zutreffendenfalls in dem Verfahrensschritt S4' die Bedingung

$$L < S_L \qquad\qquad\qquad (IV)$$

geprüft, wobei L die Leistungsgröße, also bspw. Drehmoment oder aufgenommene Leistung bzw. die resultierende Arbeitsleistung des Kältemittelverdichters 3 und $S_L$ ein Leistungsschwellwert ist. Anstelle der Bedingung (I) kann zur Durchführung des Verfahrens nach Figur 5 sowohl die Bedingung (II) oder die Bedingung (III) als auch eine beliebige Kombination dieser Bedingungen (I) bis (III) verwendet werden.

Für alle Lastpunkte des Kältemittelkreislaufs 1 kann ein einziger Wert für den Steuersignalmaximalwert $ST_{max}$ bestimmt werden. Dies bedeutet, dass im Falle eines mechanischen Kältemittelverdichters 3 ein maximaler Wert für das Regelstromsignal als Ansteuersignal ST und im Falle eines elektrischen Kältemittelverdichters 3 ein maximaler Wert für das Drehzahlsignal als Ansteuersignal ST bestimmt wird. Wird für alle Lastfälle ein gemeinsamer Steuersignalmaximalwert $ST_{max}$ bestimmt, kann auch für alle Lastfälle ein gemeinsamer Steuersignalschwellwert STsw festgelegt werden.

Eine Optimierung des erfindungsgemäßen Verfahrens wird dadurch erreicht, dass der Steuersignalmaximalwert

$ST_{max}$ in Abhängigkeit der an dem Kältemittelkreislauf 1 anliegenden Last, die von der Umgebungstemperatur T_Um abhängt, erzeugt wird. Anstelle dieser Umgebungstemperatur kann auch der Ruhedruck des Kältemittels verwendet werden, da dieser direkt von der Umgebungstemperatur abhängt bzw. erreicht wird. Dessen Aussagekraft verstärkt sich über die Dauer der Stillstandszeit eines Fahrzeuges bzw. des Ruhezustands einer Kälteanlage.

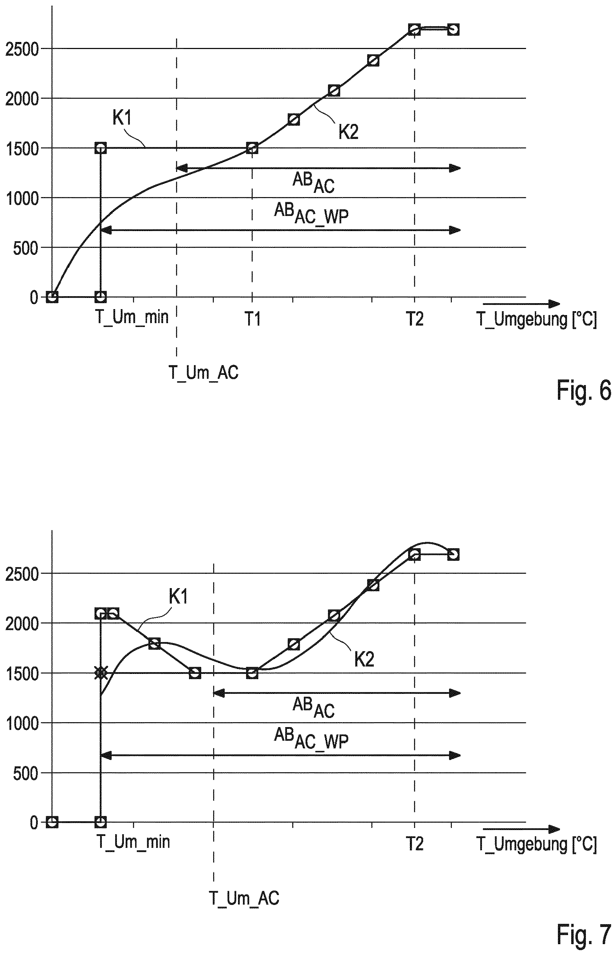

So zeigen die Figuren 6 und 7 jeweils als Kurven K1 und K2 beispielhafte Verläufe des Steuersignalmaximalwertes $ST_{max}$, wobei als Ansteuersignal ST ein Drehzahlsignal erzeugt wird und daher der Steuersignalmaximalwert $ST_{max}$ ein maximaler Drehzahlwert nmax ist. Nach diesen Figuren 6 und 7 gibt es in Abhängigkeit eines Umgebungstemperaturintervalls zwei Arbeitsbereiche $AB_{AC}$ und $AB_{AC\_WP}$. Der Arbeitsbereich $AB_{AC}$ wird im Kälteanlagenbetrieb des Kältemittelkreislaufs 1 (vgl. Figur 1) eingesetzt. Ist dieser Kältemittelkreislauf 1 mit einer Wärmepumpenfunktion ausgestattet, wird der Arbeitsbereich $AB_{AC\_WP}$ verwendet.

Die Kurven K1 gemäß den Figuren 6 und 7 setzen sich jeweils aus geraden Kurvenstücken zusammen. Der Verlauf dieser Kurven K1 kann als Kennlinie beliebig komplex ausgestaltet werden. Beispielhaft zeigen die Diagramme gemäß den Figuren 6 und 7 jeweils eine Polynomfunktion als Kurve K2. Auch bei solchen Kurven K2 wird ein Anlauf des Kältemittelverdichters 3, sowohl mittels eines Regelstromsignals bei einem mechanischen Kältemittelverdichter als auch mittels eines Drehzahlsignals bei einem elektrischen Kältemittelverdichter durchgeführt.

Nachfolgend wird die Verwendung der Kurve K1 nach Figur 6 im Wärmepumpenbetrieb und im Kälteanlagenbetrieb bei Einsatz eines elektrischen Kältemittelverdichters erläutert. Entsprechendes gilt auch bei Verwendung der Kurve K2 nach Figur 6.

Im Wärmepumpenbetrieb des Kältemittelkreislaufs 1 wird gemäß Kurve K1 von Figur 6 bei einer minimalen zulässigen Umgebungs-Temperatur $T_{UM\_min}$, die bspw. bei - 20 °C liegen kann, der maximale Drehzahlwert $n_{max}$ auf einen Drehzahlwert von 1500 rpm gesetzt. Anschließend bleibt dieser maximale Drehzahlwert konstant bis zu einer Umgebungstemperatur T1.

Anschließend steigt mit zunehmender Last, also mit zunehmender Umgebungstemperatur T_Um der Steuersignalmaximalwert $ST_{ST}$ von 1500rpm bis ca. 2750rpm an und wird ab einer Last bei einer Umgebungstemperatur T2, von bspw. 50 °C auf diesen maximalen Drehzahlwert von 2750 rpm beschränkt. Da elektrische Kältemittelverdichter 3 gemäß Stand der Technik eine Mindestdrehzahl von bspw. 800rpm aufweisen, ist ein linearer Verlauf bis auf einen Drehzahlwert Null nicht realisierbar. Daher wird für einen Anlauf eine Ansteuerung mit einem um eine bestimmte Drehzahl erhöhte Mindestdrehzahl durchgeführt, um die internen Widerstände im elektrischen Kältemittelverdichter 3 zu überwinden und den zugehörigen Elektromotor in Bewegung versetzen zu können.

Zumeist wird auch für den Startfall eine Drehzahlüberhöhung von bspw. 1500rpm als Startimpuls erforderlich, um einen Verdichteranlauf realisiert zu bekommen. Im Anschluss an einen erfolgreichen Verdichteranlauf wird dann die eigentliche Betriebsdrehzahl eingestellt, die bspw. unterhalb der Anlaufdrehzahl zu liegen kommen kann, wie etwa eine Minimaldrehzahl von 800rpm.

Erfolgt ein Anlauf des Kältemittelverdichters 3 im AC-Betrieb, wird bei einer Umgebungstemperatur $T_{UM\_AC}$ entsprechend der Kurve K1 der Figur 6 der maximale Drehzahlwert auf den Drehzahlwert 1500 rpm gesetzt. Bei zunehmender Last erfolgt ab der Umgebungstemperatur T1 ein linearer Anstieg, welcher bei der Umgebungstemperatur T2 mit dem Drehzahlwert 2750 rpm endet.

Bei einem mechanischen Kältemittelverdichter 3 ergibt sich für den maximalen Wert des Regelstromsignals als Steuersignalmaximalwert $ST_{max}$ ein den Kurven K1 und K2 der Figur 6 entsprechender Verlauf.

Bei hohen Lasten wird der Steuersignalmaximalwert $ST_{max}$ auf einen maximalen Wert begrenzt, wie dies beispielhaft in Figur 6 anhand der Kurven K1 und K 2 sowie in Figur 7 anhand der Kurve K 1 dargestellt ist. Es ist auch möglich, auf eine solche Begrenzung des Steuersignalmaximalwertes $ST_{max}$ auf einen konstant bleibenden Maximalwert zu verzichten, wobei ab der Umgebungstemperatur T1 im Vergleich zu den Figuren K 1 und K 2 gemäß Figur 6 und zur Kurve K1 nach Figur 7 ein flacherer Anstieg vorzusehen ist.

Die Kurven K1 und K2 gemäß Figur 7 zeigen einen Verlauf, der sich von demjenigen von Figur 6 darin unterscheidet, dass die Werte des Steuersignalmaximalwertes $ST_{max}$ nicht kontinuierlich anwachsen, sondern zwischen dem Anfangspunkt $T_{UM\_min}$ und dem Endpunkt in einem kurzen Temperaturintervall abnehmen und anschließend wieder zunehmen.

Der letztlich zielführende Verlauf der n_max-Kurve über die anliegende Systemlast kann von den Kurven K1 und K2 der Figuren 6 und 7 deutlich abweichen und ist für die jeweilig zu applizierende Fahrzeugklimaanlage neu zu ermitteln.

Das generelle Anlaufverhalten eines Kältemittelverdichters 3 hat keinen Einfluss auf das erfindungsgemäße Verfahren, da in jedem Fall die Begrenzung des Ansteuersignals ST auf den Steuersignalmaximalwert $ST_{max}$ zu erfolgen hat.

Folgt final ein erfolgreicher Anlauf des Verdichters so werden die Anlaufkurven aus Figur 6 und Figur 7 verlassen und gemäß der Betriebsstrategien der Flussdiagramme der Figuren 2 bis 5 die Drehzahlgrenzen freigegeben bis zum Maximalwert.

**Bezugszeichen**

| | |
|---|---|
| 1 | Kältemittelkreislauf |
| 2 | Verdampfer des Kältemittelkreislaufs 1 |
| 3 | Kältemittelverdichter |
| 4 | Kältemittelkondensator oder Gaskühler des Kältemittelkreislaufs 1 |
| 5 | Expansionsorgan des Kältemittelkreislaufs 1 |
| 6 | Steuergerät |
| 7 | innerer Wärmeübertrager |
| 8 | Kältemittelsammler |
| | |
| pT1 | Druck-Temperatur-Sensor |
| pT2 | Druck-Temperatur-Sensor |
| pT3 | Druck-Temperatur-Sensor |

**Patentansprüche**

1. Verfahren zum Betreiben eines Kältemittelkreislaufs (1) für eine Fahrzeugklimaanlage mit

   - einem Kältemittelverdichter (3), welcher mittels eines Ansteuersignals (ST) zur Regelung der Verdichterleistung regelbar ist,
   - einem Kondensator (4) oder Gaskühler (4),
   - einem Verdampfer (3) mit zugeordnetem Expansionsorgan (5), und
   - wenigstens einem Drucksensormittel (pT1, pT3) zur Messung des Kältemitteldruckes auf der Hochdruck- und/oder Niederdruckseite des Kältemittelkreislaufs (1),

   **dadurchgekennzeichnet**, dass

   a) zur Erzeugung einer Anlaufphase des Kältemittelverdichters (3) dessen Ansteuersignal ST ausgehend von einem Minimalwert ($ST_{min}$) zeitlich ansteigend bereitgestellt wird,
   b) ein Steuersignalmaximalwert ($ST_{max}$) und ein Steuersignalschwellwert ($ST_{sw}$) mit $ST_{sw} < ST_{max}$ bereitgestellt werden,
   c) das Ansteuersignal (ST) auf den Steuersignalmaximalwert ($ST_{max}$) begrenzt wird, wenn das Ansteuersignal (ST) den Steuersignalschwellwert (STsw) erreicht und der gemessene Hoch- und/oder Niederdruckdruckwert ($P_{HD}$, $P_{ND}$) eine der folgenden Bedingungen erfüllt bzw. erfüllen:

      (I) der Hochdruckwert ($P_{HD}$) kleiner als ein Hochdruckschwellwert ($S_{P\_HD}$) ist,
      (II) der Niederdruckwert ($P_{ND}$) größer als ein Niederdruckschwellwert ($S_{P\_ND}$) ist, und/oder
      (III) die Differenz ($\Delta P$) von Hochdruckwert ($P_{HD}$) und Niederdruckwert ($P_{ND}$) kleiner als ein Differenzdruckschwellwert ($S_{\Delta P}$) ist, und

   d) nach Ablauf einer definierten Zeitdauer (t) die Anlaufphase des Kältemittelverdichters (3) beendet wird, wenn der gemessene Hochdruckwert ($P_{HD}$) und/oder der gemessene Niederdruckwert ($P_{ND}$) nach wie vor eine der Bedingungen (I) bis (III) erfüllen bzw. erfüllt.

2. Verfahren nach Anspruch 1,
   **dadurchgekennzeichnet**, dass e) der Kältemittelverdichter (3) mit Diagnosemittel ausgebildet wird, mit welchen wenigstens eine Leistungsgröße (L) des Kältemittelverdichters (3) erzeugt wird, und
   anstelle der Verfahrensschritte c und d folgende Verfahrensschritte durchgeführt werden:

   c1) das Ansteuersignal (ST) auf den Steuersignalmaximalwert ($ST_{max}$) begrenzt wird, wenn das Ansteuersignal (ST) den Steuersignalschwellwert (STsw) erreicht, die Leistungsgröße (L) kleiner als ein definierter Leistungsschwellwert ($S_L$) ist und der gemessene Hoch- und/oder Niederdruckdruckwert ($P_{HD}$, $P_{ND}$) eine der folgenden Bedingungen erfüllt bzw. erfüllen:

(I) der Hochdruckwert ($P_{HD}$) kleiner als ein Hochdruckschwellwert ($S_{P\_HD}$) ist,
(II) der Niederdruckwert ($P_{ND}$) größer als ein Niederdruckschwellwert ($S_{P\_ND}$) ist, oder
(III) die Differenz ($\Delta P$) von Hochdruckwert ($P_{HD}$) und Niederdruckwert ($P_{ND}$) kleiner als ein Differenzdruckschwellwert ($S_{\Delta P}$) ist, und

d1) nach Ablauf einer definierten Zeitdauer (t) die Anlaufphase des Kältemittelverdichters (3) beendet wird, wenn der gemessene Hochdruckwert ($P_{HD}$) und/oder der gemessene Niederdruckwert ($P_{ND}$) nach wie vor eine der Bedingungen (I) bis (III) erfüllen bzw. erfüllt und die Leistungsgröße (L) kleiner als der Leistungsschwellwert ($S_L$) ist.

3. Verfahren nach Anspruch 2,
**dadurch gekennzeichnet, dass** die Diagnosemittel ausgebildet sind als Leistungsgröße (L) des Kältemittelverdichters (3) die Leistungsaufnahme und/oder das Drehmoment und/oder die resultierende Arbeitsleistung zu erfassen.

4. Verfahren nach einem der vorhergehenden Ansprüche,
**dadurch gekennzeichnet, dass** der Steuersignalmaximalwert ($ST_{max}$) in Abhängigkeit der Höhe einer Regelabweichung zwischen einem Sollwert einer den Kältemittelkreislauf regelnden Regelgröße und deren Istwert bestimmt wird.

5. Verfahren nach einem der vorhergehenden Ansprüche,
d**adurch gekennzeichnet**, dass der Kältemittelverdichter (3) als elektrischer Kältemittelverdichter mit einem Elektromotor ausgebildet wird, wobei als Ansteuersignal (ST) ein Drehzahlsignal für den Elektromotor verwendet wird.

6. Verfahren nach einem der Ansprüche 1 bis 4,
d**adurch gekennzeichnet,** dass der Kältemittelverdichter (3) als mechanischer Kältemittelverdichter mit einem Proportionalventil ausgebildet wird, wobei als Ansteuersignal (ST) ein Regelstromsignal für das Proportionalventil verwendet wird.

7. Verfahren nach einem der vorhergehenden Ansprüche,
**dadurch gekennzeichnet, dass** der Kältemittelkreislauf (1) mit einer Wärmepumpenfunktion ausgebildet wird.

## Claims

1. Method for operating a coolant circuit (1) for a vehicle air-conditioning system having

   - a coolant compressor (3), which can be adjusted by means of an actuation signal (ST) to control the compressor output,
   - a condenser (4) or gas cooler (4),
   - an evaporator (3) with an associated expansion valve (5), and
   - at least one pressure sensor (pT1, pT3) for measuring the coolant pressure on the high-pressure and/or low-pressure side of the coolant circuit (1),

   **characterised in that**

   a) the actuation signal ST of the coolant compressor is provided so as to increase over time from a minimum value (STmin) in order to generate a start-up phase of the coolant compressor (3),
   b) a control signal maximum value (STmax) and a control signal threshold (STsw) are provided where STsw < STmax,
   c) the actuation signal (ST) is limited to the control signal maximum value (STmax) if the actuation signal (ST) reaches the control signal threshold (STsw) and the measured high-pressure and/or low-pressure value ($P_{HD}$, $P_{ND}$) satisfies one of the following conditions:

      (I) the high-pressure value ($P_{HD}$) is lower than the high-pressure threshold ($S_{P\_HD}$),
      (II) the low-pressure value ($P_{ND}$) is higher than the low-pressure threshold ($S_{P\_ND}$), and/or
      (III) the difference ($\Delta P$) between the high-pressure value ($P_{HD}$) and the low-pressure value ($P_{ND}$) is less than a differential pressure threshold ($S\Delta P$), and

d) after a defined duration (t), the start-up phase of the coolant compressor (3) is terminated if the measured high-pressure value ($P_{HD}$) and/or the measured low-pressure value ($P_{ND}$) still satisfies one of the conditions (I) to (III).

2. Method according to claim 1,
**characterised in that**
e) the coolant compressor (3) is designed with diagnostic means, with which at least one of the output variables (L) of the coolant compressor (3) is generated, and the following method steps are performed instead of the method steps c and d:
c1) the actuation signal (ST) is limited to the control signal maximum value (STmax) if the actuation signal (ST) reaches the control signal threshold (STsw), the output variable (L) is lower than a defined output threshold ($S_L$) and the measured high-pressure and/or low-pressure value ($P_{HD}$, $P_{ND}$) satisfies one of the following conditions:

(I) the high-pressure value ($P_{HD}$) is lower than a high-pressure threshold ($S_{P\_HD}$),
(II) the low-pressure value ($P_{ND}$) is higher than a low-pressure threshold ($S_{P\_ND}$), or
(III) the difference ($\Delta P$) between the high-pressure value ($P_{HD}$) and the low-pressure value ($P_{ND}$) is less than a differential pressure threshold ($S\Delta P$), and d1) after a defined duration (t), the start-up phase of the coolant compressor (3) is terminated if the measured high-pressure value ($P_{HD}$) and/or the measured low-pressure value ($P_{ND}$) still satisfies one of the conditions (I) to (III) and the output variable (L) is lower than the output threshold (SL).

3. Method according to claim 2,
**characterised in that**
the diagnostic means are designed as an output variable (L) of the coolant compressor (3) for determining the power consumption and/or the torque and/or the resulting performance.

4. Method according to any of the preceding claims,
**characterised in that**
the control signal maximum value (STmax) is determined depending on the extent of a control deviation between a setpoint of a control variable controlling the coolant circuit and its actual value.

5. Method according to any of the preceding claims,
**characterised in that**
the coolant compressor (3) is designed as an electric coolant compressor with an electric motor, wherein a rotational speed signal for the electric motor is used as the actuation signal (ST).

6. Method according to any one of claims 1 to 4,
**characterised in that**
the coolant compressor (3) is designed as a mechanical coolant compressor with a proportional valve, wherein a control current signal for the proportional valve is used as the actuation signal (ST).

7. Method according to any of the preceding claims,
**characterised in that**
the coolant circuit (1) is designed with a heat pump function.

**Revendications**

1. Procédé permettant de faire fonctionner un circuit frigorifique (1) pour un système de climatisation de véhicule avec

- un compresseur frigorifique (3) qui peut être régulé au moyen d'un signal de commande (ST) pour réguler la puissance du compresseur,
- un condenseur (4) ou un refroidisseur de gaz (4),
- un évaporateur (3) avec un élément d'expansion associé (5), et
- au moins un capteur de pression (pT1, pT3) pour mesurer la pression du réfrigérant du côté haute pression et/ou basse pression du circuit frigorifique (1),

**caractérisé en ce que**,

a) pour produire une phase de démarrage du compresseur frigorifique (3), dont le signal de commande ST est fourni de manière croissante dans le temps à partir d'une valeur minimale ($ST_{min}$),

b) une valeur maximale de signal de commande ($ST_{max}$) et une valeur seuil de signal de commande (STsw) avec STsw < $ST_{max}$ sont fournies,

c) le signal de commande (ST) est limité à la valeur maximale de signal de commande ($ST_{max}$) lorsque le signal de commande (ST) atteint la valeur seuil de signal de commande ($ST_{SW}$) et que la valeur de haute pression et/ou de basse pression mesurée ($P_{HD}$, $P_{ND}$) satisfait à l'une des conditions suivantes :

(I) la valeur de haute pression ($P_{HD}$) est inférieure à une valeur seuil de haute pression ($S_{P\_HD}$),

(II) la valeur de basse pression ($P_{ND}$) est supérieure à une valeur seuil de basse pression ($\bar{S}_{P\_ND}$), et/ou

(III) la différence ($\Delta P$) entre la valeur de haute pression ($P_{HD}$) et la valeur de basse pression ($P_{ND}$) est inférieure à une valeur seuil de pression différentielle ($S_{\Delta P}$), et

(d) après l'écoulement d'une durée définie (t), la phase de démarrage du compresseur frigorifique (3) est terminée lorsque la valeur mesurée de la haute pression ($P_{HD}$) et/ou la valeur mesurée de la basse pression ($P_{ND}$) satisfont encore à l'une des conditions (I) à (III).

**2.** Procédé selon la revendication 1,
**caractérisé en ce que** e) le compresseur frigorifique (3) est formé avec des moyens de diagnostic avec lesquels au moins la variable de puissance (L) du compresseur frigorifique (3) est générée, et au lieu des étapes de procédé c et d, on effectue les étapes de procédé suivantes :

c1) le signal de commande (ST) est limité à la valeur maximale de signal de commande ($ST_{max}$) lorsque le signal de commande (ST) atteint la valeur seuil de signal de commande ($ST_{SW}$), la variable de puissance (L) est inférieure à une valeur seuil de puissance définie (SL) et la valeur de haute pression et/ou de basse pression mesurée ($P_{HD}$, $P_{ND}$) satisfait à l'une des conditions suivantes :

(I) la valeur de haute pression ($P_{HD}$) est inférieure à une valeur seuil de haute pression ($S_{P\_HD}$),

(II) la valeur de basse pression ($P_{ND}$) est supérieure à une valeur seuil de basse pression ($\bar{S}_{P\_ND}$) ; ou

(III) la différence ($\Delta P$) entre la valeur de haute pression ($P_{HD}$) et la valeur de basse pression ($P_{ND}$) est inférieure à une valeur seuil de pression différentielle ($S_{\Delta p}$), et

d1) la phase de démarrage du compresseur frigorifique (3) est terminée après qu'une période de temps définie (t) se soit écoulée lorsque la valeur de pression élevée mesurée ($P_{HD}$) et/ou la valeur de pression basse mesurée ($P_{ND}$) satisfont encore à l'une des conditions (I) à (III) et que la variable de puissance (L) est inférieure à la valeur seuil de puissance ($S_L$).

**3.** Procédé selon la revendication 2,
**caractérisé en ce que** les moyens de diagnostic sont conçus pour détecter la consommation d'énergie et/ou le couple et/ou la puissance de travail résultante en tant que grandeur de puissance (L) du compresseur frigorifique (3).

**4.** Procédé selon l'une des revendications précédentes,
**caractérisé en ce que** la valeur maximale de signal de commande ($ST_{max}$) est déterminée en fonction de l'amplitude d'un écart de commande entre une valeur de consigne d'une grandeur de commande régulant le circuit frigorifique et sa valeur réelle.

**5.** Procédé selon l'une des revendications précédentes,
**caractérisé en ce que** le compresseur frigorifique (3) est réalisé sous la forme d'un compresseur frigorifique électrique avec un moteur électrique, dans lequel un signal de vitesse de rotation du moteur électrique étant utilisé comme signal de commande (ST).

**6.** Procédé selon l'une des revendications 1 à 4,
**caractérisé en ce que** le compresseur frigorifique (3) est réalisé sous la forme d'un compresseur frigorifique mécanique avec une soupape proportionnelle, dans lequel un signal de courant de commande pour la soupape proportionnelle étant utilisé comme signal de commande (ST).

**7.** Procédé selon l'une des revendications précédentes,
**caractérisé en ce que** le circuit frigorifique (1) présente une fonction de pompe à chaleur.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19935731 A1
- DE 3706152 A
- JP 2000105033 A
- JP H08128765 A
- JP 2004162878 A